# EUROPEAN PATENT SPECIFICATION

(11) **EP 3 532 779 B1**
(45) Date of publication and mention of the grant of the patent: **27.09.2023**
(21) Application number: 17790712.8
(22) Date of filing: 11.10.2017
(51) Int. Cl.: F25B 30/02, F25B 40/04, F25B 49/02

(54) **A METHOD FOR CONTROLLING A COMPRESSOR OF A HEAT PUMP**
VERFAHREN ZUR STEUERUNG EINES KOMPRESSORS EINER WÄRMEPUMPE
PROCÉDÉ DE COMMANDE D'UN COMPRESSEUR D'UNE POMPE À CHALEUR

(30) Priority: 31.10.2016 DK PA201600670
(43) Date of publication of application: 04.09.2019
(73) Proprietor: Thermia AB, 671 34 Arvika (SE)
(72) Inventor: WURTZ, Albrecht, 67129 Arvika (SE); NORD, Björn, 67129 Arvika (SE); ÖHMARK, Olav, 67129 Arvika (SE); MALVESTAM, Daniel, 67129 Arvika (SE); STENER, Robert, 67129 Arvika (SE); PERSSON, Tomas, 67129 Arvika (SE)
(74) Representative: Eisenführ Speiser
(86) International application number: PCT/EP2017/075989
(87) International publication number: WO 2018/077622

(56) References cited:
- WO-A1-2007/004962
- US-A1- 2008 098 760
- US-A1- 2008 276 638

## Description

### FIELD OF THE INVENTION

The present invention relates to a method for controlling a compressor of a heat pump. The heat pump being controlled is arranged for supplying heat to a first heat sink and to a second heat sink, e.g. in the form of a space heating system and a hot tap water system. The method of the invention ensures that the heat pump operates in such a manner that heat is always available for each of the heat sinks when required.

### BACKGROUND OF THE INVENTION

Houses, such as single family houses, are normally provided with a heating system for providing space heating as well as heating for hot tap water. The heating may be provided by means of a heat pump. Heat pumps comprise a compressor, a heat rejecting heat exchanger, e.g. in the form of a condenser or in the form of a gas cooler, an expansion device and an evaporator arranged in a refrigerant path. Refrigerant flowing in the refrigerant path is compressed by the compressor before being supplied to the heat rejecting heat exchanger. In the heat rejecting heat exchanger, heat exchange takes place between the refrigerant flowing through the heat rejecting heat exchanger and a secondary fluid flow across the heat rejecting heat exchanger, in such a manner that heat is rejected from the refrigerant flowing through the heat rejecting heat exchanger. The refrigerant leaving the heat rejecting heat exchanger is supplied to the expansion device, where it undergoes expansion before being supplied to the evaporator. In the evaporator, heat exchange takes place between the refrigerant flowing through the evaporator and the ambient or a secondary fluid flow across the evaporator, in such a manner that heat is absorbed by the refrigerant flowing through the evaporator. The refrigerant leaving the evaporator is supplied to the compressor. Thus refrigerant flowing in the refrigerant path of the heat pump is alternating compressed and expanded, while heat exchange takes place at the heat rejecting heat exchanger and the evaporator.

The secondary fluid flow across the heat rejecting heat exchanger provides the required heating for the space heating, the hot tap water and possibly further heat sinks.

The heat pump must be operated in such a manner that the heating provided by the heat exchange taking place in the heat rejecting heat exchanger meets the energy demand of the heating system. In particular, the compressor should be operated to obtain this. In colder climates, such as Nordic climate, the yearly average energy demand for hot tap water is in the order of 10% of the average yearly demand for space heating. However, the peak heat demand for hot tap water when there is an ongoing extraction, e.g. when someone is taking a shower, is much higher than the peak space heating demand. Therefore it is convenient to have a storage tank for hot tap water.

During space heating mode, i.e. when the energy demand of the space heating system is highest, and heating is therefore primarily provided to the space heating system, the compressor may be controlled on the basis of measurements performed by one or more temperature sensors arranged for measuring the temperature of secondary heat transfer fluid flowing through the space heating system.

During tap water mode, i.e. when the energy demand of the hot tap water system is highest, and heating is therefore primarily provided to the hot tap water system, the compressor may be controlled based on various criteria and on measurements performed by various sensors.

Capacity controlled compressors often have a considerably higher efficiency at low compressor speeds than at high compressor speeds. It is therefore desirable to charge the hot tap water tank, i.e. heat the tap water in the tank, at a low compressor speed, in order to optimise efficiency. However, it may happen that a tap water withdrawal is initiated during charging of the hot tap water tank, or that charging of the hot tap water tank is initiated during withdrawal. In such cases it would be advantageous to operate the compressor at a higher speed, in order to ensure that the peak energy demand of the hot tap water system is met. Furthermore, if the demand for space heating is high, a low compressor speed during tap water mode may lead to a shortage of provided space heating, due to longer charging times. This in turn may lead to loss of comfort and/or reduced efficiency when space heating mode is entered, since the compressor may need to be operated at a higher speed. In the worst case, the space heating loss may become so large that an auxiliary heater is required by the space heating system.

WO 2007/004962 A1 discloses a control device intended for use with a heat pump with an evaporator and a condenser in which a heat transfer medium in a heat transfer circuit, that is heated up by means of the evaporator and a compressor, is arranged to transfer heat to a main liquid flow, via a first part of a heat exchanger and a second part of a heat exchanger.

### DESCRIPTION OF THE INVENTION

It is an object of embodiments of the invention to provide a method for controlling a heating capacity of a heat pump supplying heat to at least two heat sinks, where it is ensured that heat is always available for each of the heat sinks when required, while optimising energy consumption.

The invention provides a method for controlling a heating capacity of a heat pump as defined in claim 1.

The invention provides a method for controlling a heating capacity of a heat pump. In the present context, the term 'heat pump' should be interpreted to mean a system comprising at least one compressor, a heat rejecting heat exchanger, an expansion device and an evaporator arranged in a refrigerant path. Refrigerant flowing in the refrigerant path is alternatingly compressed by the compressor(s) and expanded by the expansion device, and heat exchange takes place at the heat rejecting heat exchanger and at the evaporator. The heat pump provides heating to an external heating system via the heat exchange taking place at the heat rejecting heat exchanger. The heating capacity could, e.g., be controlled by controlling a compressor of the heat pump, a capacity of an electric heater related to the heat sinks and/or a speed of secondary circulation pumps related to the heat sinks.

The compressor being controlled by the method according to the invention forms part of the heat pump. The compressor may be in the form of a variable speed compressor, in which case the compressor is controlled by controlling the speed of the compressor. As an alternative, the compressor may be in the form of two or more variable speed compressors, e.g. arranged in a compressor rack. In this case the compressor may be controlled by controlling the speed of one or more compressors and/or by switching the individual compressors on or off.

The heat pump is arranged for supplying heat to a first heat sink and to a second heat sink. Accordingly, the heat obtained from the heat exchange taking place in the heat rejecting heat exchanger needs to be distributed in a suitable manner between the first heat sink and the second heat sink. The heat sinks could, e.g., be in the form of a space heating system and a hot tap water system for a house, such as a single family house. It should be noted that it is not ruled out that the heat pump is arranged for supplying heat to one or more further heat sinks. In the claimed case that the first and second heat sinks are in the form of a space heating system and a hot tap water system, respectively, for a single family house, a third heat sink could, e.g., be in the form of a heating system for heating the water of a swimming pool.

According to the method of the invention, the heating capacity of the heat pump is initially operated according to a first operating mode in which heat is primarily supplied to the first heat sink. Thus, it has been determined that the first heat sink is the one with the highest heating demand, and the first operating mode has been selected in order to meet this heating demand. Accordingly, the heat pump, including the compressor, is operated in order to supply heating to the first heat sink, possibly based on a set of relevant control parameters relating to the first heat sink, such as temperature measurements performed at suitable positions.

Next, a switch in operating mode from the first operating mode to a second operating mode in which heat is primarily supplied to the second heat sink is detected. Accordingly, something has occurred which has the consequence that the second heat sink is now the one with the highest heating demand. It is therefore necessary to perform a switch in operating mode from the first operating mode to the second operating mode, in order to ensure that the heating demand of the second heat sink is met. The switch in operating mode could, e.g., be detected by detecting that a valve has been opened or closed, or by detecting a predetermined change in a relevant temperature. Alternatively or additionally, a flag or a variable in a software program used for controlling the heat pump and/or the heat sinks may indicate in which operating mode the compressor is operating. In this case the switch in operating mode may be detecting by detecting a change in the flag or variable. The flag or variable may, e.g., be changed by control logic controlling a valve of the heat sinks providing information to a control logic of the compressor regarding a change in the state of the valve.

Finally, in response to detecting the switch in operating mode, the heat pump is operated in such a manner that control logic for the heat pump, at which the heat pump operated prior to the switch in operating mode is maintained, at least initially. For instance, the compressor may be operated in such a manner that the compressor speed, at which the compressor operated prior to the switch in operating mode is maintained, at least initially. Thus, at least initially, the heat pump, notably the compressor, continues to operate in a manner which ensures that the heating demand of the first heat sink is met. Thereby it is avoided that the supply of heat becomes insufficient to also meet the heating demand of the first heat sink. Furthermore, if this compressor speed is actually sufficient to meet the heating demand of the first heat sink as well as the heating demand of the second heat sink, there is no need to increase the compressor speed in response to the detected switch in operating mode. Accordingly, the compressor is operated in an as energy efficient manner as possible, while ensuring that sufficient heating is available for the first heat sink as well as for the second heat sink.

The heat pump may comprise a controller unit running software adapted for controlling the heat pump and/or the heat sinks, including controlling the compressor, valves of the heat pump and/or the heat sinks, measurements of relevant control parameters, such as temperatures, pressures, etc.

The method further comprises the steps of:
- after the switch in operating mode from the first operating mode to the second operating mode has been detected, monitoring a temperature related to the second heat sink, and
- adjusting the compressor speed of the heat pump in accordance with the monitored temperature.

The heating capacity of the heat pump is adjusted by adjusting the compressor speed. As mentioned above, the compressor speed is initially not changed in response to the detected switch in operating mode. However, the new operating conditions, represented by the switch in operating mode, may not be matched by this unchanged compressor speed. In particular, the compressor speed may not be sufficient to meet the increased heating demand of the second heat sink, which triggered the switch in operating mode. Therefore, a temperature related to the second heat sink is monitored, after the switch in operating mode from the first operating mode to the second operating mode has been detected, in order to ensure that this temperature remains within an acceptable range. If the monitored temperature falls outside the acceptable range, the compressor speed is adjusted in order to restore an acceptable level for the monitored temperature.

In the claimed case that the first heat sink is a space heating system and the second heat sink is a hot tap water system, the monitored temperature could, e.g., be a temperature prevailing inside a hot tap water tank. If this temperature drops below a certain threshold value, it is an indication that the current compressor speed is insufficient to meet the current heat demand of the second heat sink, which might be a peak demand caused by a drain from the hot tap water tank. Thus, if such a temperature drop is detected, the compressor speed must be increased in order to avoid that heat is drawn from the supply of the first heat sink to the supply of the second heat sink to an extent where the heating demand of the first heat sink can no longer be met.

The step of adjusting the heating capacity in accordance with the monitored temperature may only be performed if the switch in operating mode from the first operating mode to the second operating mode has been completed.

In some cases it may take a certain time from a switch in operating mode from the first operating mode to the second operating mode is initiated until it is completed. In this case the switch in operating mode may be detected at the initiation, e.g. by detecting the opening or closing of a valve. However, the monitored temperature may not be representative for the actual heating demand of the second heat sink until the system has adapted to the new operating conditions. It may therefore be an advantage to wait until the switch in operating mode has been completed before any adjustments are made to the heating capacity, in order to ensure that an adjustment of the heating capacity is actually required in order to meet the heating demand of the second heat sink.

The method may further comprise the step of increasing the heating capacity, e.g. increasing the compressor speed, if it is detected that a demand level for the first heat sink and/or for the second heat sink increases. Increasing the compressor speed results in an increased heat transfer in the heat rejecting heat exchanger, and thereby to an increased heat supply to the heating system. Therefore, increasing the compressor speed will ensure that the increased demand level for the first heat sink and/or for the second heat sink is met, i.e. the total heat supply is increased to match the increased demand level.

The method further comprises the steps of:
- storing a compressor speed for the heat pump, at which the heat pump operated prior to the switch in operating mode from the first operating mode to the second operating mode,
- detecting a switch in operating mode from the second operating mode to the first operating mode, and
- restoring the stored compressor speed and operating the heat pump at the stored compressor speed, after the switch in operating mode from the second operating mode to the first operating mode has been detected.

The stored control logic settings could be or include the compressor speed of the compressor, at which the compressor operated prior to the switch in operating mode from the first operating mode to the second operating mode. According to the claimed embodiment, the speed at which the compressor operated prior to the switch in operating mode from the first operating mode to the second operating mode is stored. This is also the compressor speed which is initially maintained after the switch in operating mode. Accordingly, this compressor speed can be assumed to match the heating demand when the system is operated in the first operating mode.

When the system has been operated in the second operating mode for a while, a switch in operating mode from the second operating mode to the first operating mode is detected. Accordingly, the first heat sink is now again the one with the highest heating demand. If it is assumed that the overall operating conditions, including the heating demand of the first heat sink, has not changed significantly since the switch in operating mode from the first operating mode to the second operating mode, then the stored compressor speed will most likely ensure that the heating demand of the first heat sink is met, after the switch in operating mode from the second operating mode to the first operating mode. This is therefore a good starting point.

The first heat sink is a space heating system and the second heat sink is a hot tap water system.

According to the claimed embodiment, the switch in operating mode from the first operating mode to the second operating mode is a switch in operating mode from a space heating mode to a hot tap water mode. The switch in operating mode may, in this case, be initiated by a significant drain of the hot water tank, e.g. due to somebody taking a shower, or by initiation of heating of the water in the hot water tank. In response to this, instead of initiating a normal hot tap water mode control of the compressor, the compressor speed which was applied during the space heating mode is maintained. Accordingly, even though the heating demand of the hot tap water system is higher than the heating demand of the space heating system, probably due to a temporary peak demand of the hot tap water system, the compressor is initially operated at a speed which is suitable with respect to the heating demand of the space heating system.

The step of detecting a switch in operating mode may comprise detecting a change in a setting of a valve controlling a flow of hot heat exchange fluid to the first heat sink and the second heat sink.

For instance, the valve may be of a kind which has two settings, i.e. one in which it supplies hot heat exchange fluid to the first heat sink and one in which it supplies hot heat exchange fluid to the second heat sink. In this case, the switch in operating mode from the first operating mode to the second operating mode may be detected by detecting that the valve is switched from the setting in which it supplies hot heat exchange fluid to the first heat sink to the setting in which it supplies hot heat exchange fluid to the second heat sink.

As an alternative, the valve may be of a kind which is capable of supplying hot heat exchange fluid simultaneously to the first heat sink as well as to the second heat sink, but where the fraction of the available hot heat exchange fluid which is supplied to the first heat sink and the second heat sink, respectively, is variable. In this case, the switch in operating mode from the first operating mode to the second operating mode may be detected by detecting a significant change in the distribution of the available hot heat exchange fluid among the first heat sink and the second heat sink.

### BRIEF DESCRIPTION OF THE DRAWINGS

The invention will now be described in further detail with reference to the accompanying drawings in which
Fig. 1 is a diagrammatic view of a heating system connected to a heat pump comprising a compressor which is controlled using a method according to an embodiment of the invention, and
Fig. 2 is a flow chart illustrating a method according to an embodiment of the invention.

### DETAILED DESCRIPTION OF THE DRAWINGS

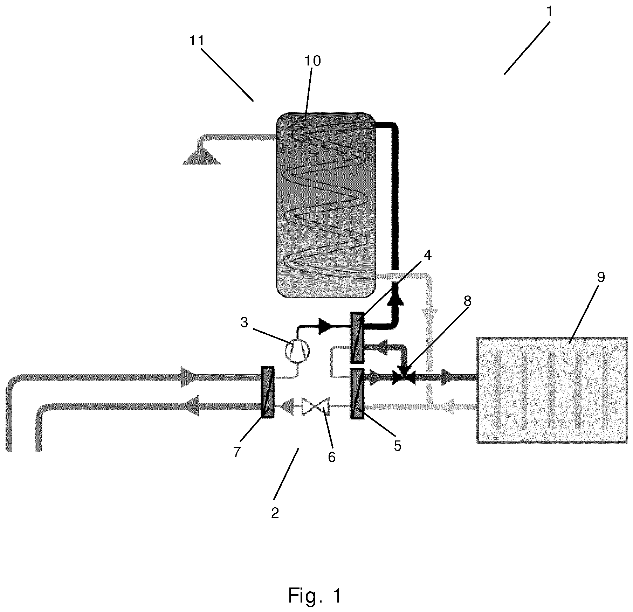

Fig. 1 is a diagrammatic view of a heating system 1. The heating system 1 is connected to a heat pump 2 comprising a compressor 3, a de-superheater 4, a heat rejecting heat exchanger 5, an expansion device 6 and an evaporator 7 arranged along a refrigerant path. Refrigerant flowing in the refrigerant path is alternating compressed by the compressor 3 and expanded by the expansion device 6, while heat exchange takes place in the de-superheater 4, the heat rejecting heat exchanger 5 and the evaporator 7. In the de-superheater 4 and the heat rejecting heat exchanger 5, the heat exchange takes place between the refrigerant and a secondary heat transfer fluid providing heating for the heating system 1, in such a manner that heat is rejected from the refrigerant and absorbed by the secondary heat transfer fluid. Thereby the secondary heat transfer fluid is heated. In the evaporator 7, the heat exchange takes place between the refrigerant and the ambient or a secondary fluid flow, e.g. in the form of brine, in such a manner that heat is absorbed by the refrigerant.

When the secondary heat transfer fluid has passed through the heat rejecting heat exchanger 5, it is supplied to a mix valve 8 being capable of supplying secondary heat transfer fluid, and thereby heat, to a first heat sink in the form of a space heating system 9 and/or to a second heat sink in the form of a hot water tank 10 of a hot tap water system 11. The mix valve 8 may be in a position in which secondary heat transfer fluid is only supplied to the space heating system 9, in a position in which secondary heat transfer fluid is only supplied to the hot water tank 10, or in a position in which some of the secondary heat transfer fluid is supplied to the space heating system 9 and some of the secondary heat transfer fluid is supplied to the hot water tank 10. In the latter case, the distribution of the available secondary heat transfer fluid among the space heating system 9 and the hot water tank 10 can be adjusted according to the heating demand of the space heating system 9 and the hot tap water system 11, respectively, by appropriately adjusting the mix valve 8.

Secondary heat transfer fluid being supplied to the space heating system 9 is cooled while heat is supplied to the space heating system 9, and the cooled secondary heat transfer fluid is returned to the heat rejecting heat exchanger 5 in order to absorb heat during heat exchange with refrigerant flowing through the heat rejecting heat exchanger 5.

Secondary heat transfer fluid being supplied to the hot tap water system 11 is initially supplied to the de-superheater 4, where heat exchange takes place with refrigerant flowing through the de-superheater 4, thereby increasing the temperature of the secondary heat transfer fluid. The secondary heat transfer fluid is then supplied to the hot water tank 10, where heat exchange takes place in such a manner that the temperature of the water in the hot water tank 10 is increased and the temperature of the secondary heat transfer fluid is decreased. The cooled heat transfer fluid is returned to the heat rejecting heat exchanger 5 in order to absorb heat during heat exchange with refrigerant flowing through the heat rejecting heat exchanger 5.

The compressor 3 of the heat pump 2 may be operated in the following manner. Initially the compressor 3 is operated according to a first operating mode, in which heat is primarily supplied to the space heating system 9. Accordingly, the mix valve 8 is in a position where all or most of the secondary heat transfer fluid is supplied to the space heating system 9, and the compressor 3 is operated at a compressor speed which ensures that the heating demand of the space heating system 9 is met. The compressor speed may, e.g., be controlled on the basis of relevant control parameters, such as relevant temperature measurements, relating to the space heating system 9.

A switch in operating mode from the first operating mode to a second operating mode in which heat is primarily supplied to the hot tap water system 11 is detected. The switch in operating mode could, e.g., be detected by detecting that the mix valve 8 has moved to a position in which all or most of the secondary heat transfer fluid is supplied to the hot tap water system 11. The switch in operating mode may be caused by an increase in the heating demand of the hot tap water system 11. This may, e.g., be due to a drain of the hot water tank 10, e.g. because somebody is taking a shower, or simply due to the temperature of the water in the hot water tank 10 has decreased below a threshold value.

In response to the detected switch in operating mode from the first operating mode to the second operating mode, the compressor speed of the compressor 3 is initially maintained. Thus, the compressor 3 continues to operate at the compressor speed which ensures that the heating demand of the space heating system 9, at the time of the switch in operating mode, is met. Thereby it is ensured that the heating demand of the space heating system 9 will continue to be met while the compressor 3 is operated in the second operating mode, without operating the compressor 3 at an excessive compressor speed. The compressor speed, which is maintained after the switch in operating mode may further be stored.

After the switch in operating mode, a temperature relating to the hot tap water 11 system may be monitored. The monitored temperature could, e.g., be a temperature prevailing inside the hot tap water tank 10. The compressor speed may then be adjusted based on the monitored temperature. Thereby it is ensured that the heating demand of the hot tap water system 11 can also be met. For instance, if the temperature prevailing inside the hot tap water tank 10 starts to drop, this is an indication that the current compressor speed is insufficient to meet the heating demand of the hot tap water system 11. Accordingly, the compressor speed needs to be increased in order to ensure that sufficient heat is supplied to the hot tap water system 11, without reducing the heat supplied to the space heating system 9 unacceptably.

At a later point in time, a switch in operating mode from the second operating mode to the first operating mode may be detected. Similarly to the situation described above, the switch in operating mode may be detected by detecting that the mix valve 8 has moved to a position in which all or most of the secondary heat transfer fluid is supplied to the space heating system 9. The switch in operating mode could, e.g., be caused by a decrease in the heating demand of the hot tap water system 11. This may, e.g., be due to a temperature of water in the heated water tank 10 having reached a specified level.

In response to the detected switch in operating mode from the second operating mode to the first operating mode, the compressor 3 is operated at the previously stored compressor speed. Accordingly, the compressor speed at which the compressor 3 was operated the last time the compressor 3 was operated according to the first operating mode is reinstated. This will most likely ensure that the heating demand of the space heating system 9 is met immediately following the switch in operating mode from the second operating mode to the first operating mode.

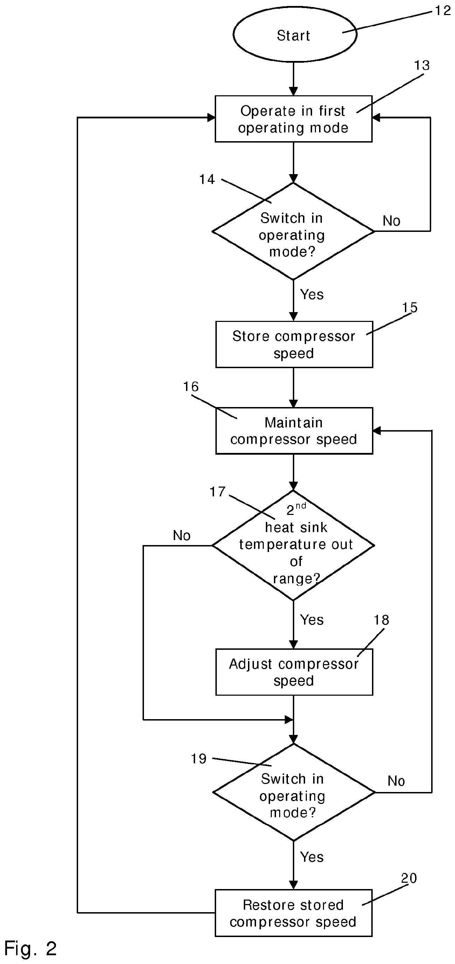

Fig. 2 is a flow chart illustrating a method according to an embodiment of the invention. The process is started at step 12. At step 13 the compressor of the heat pump is operated according to a first operating mode, in which the heat pump primarily supplies heat to a first heat sink, e.g. in the form of a space heating system. Accordingly, the compressor is operated at a compressor speed which ensures that the heating demand of the first heat sink is met, and the compressor speed may be controlled on the basis of one or more suitable control parameters relating to the first heat sink.

At step 14 it is investigated whether or not a switch in operating mode from the first operating mode to a second operating mode in which heat is primarily supplied to a second heat sink has been detected. The second heat sink could, e.g., be in the form of a hot tap water system. If a switch in operating mode has not been detected, the process is returned to step 13, and the compressor continues to be operated according to the first operating mode.

In the case that step 14 reveals that a switch in operating mode from the first operating mode to the second operating mode has been detected, the process is forwarded to step 15, where the compressor speed at which the compressor is currently operated is stored, and then further on to step 16, where this compressor speed is maintained. Accordingly, following a switch in operating mode from the first operating mode to the second operating mode, the compressor speed is initially maintained at the speed which was dictated by the control parameter(s) related to the first heat sink, which were prevailing at the time of the switch in operating mode.

At step 17 it is investigated whether or not a temperature relating to the second heat sink is out of range. If this is the case, then it is an indication that the current compressor speed does not match the heating demand of the second heat sink. In the case that the second heat sink is a hot tap water system, the temperature relating to the second heat sink could, e.g., be a temperature prevailing inside a hot water tank of the hot tap water system. If this temperature starts to drop, it is an indication that the current compressor speed is insufficient to meet the heating demand of the hot tap water system.

Thus, in the case that step 17 reveals that the temperature relating to the second heat sink is out of range, the process is forwarded to step 18, where the compressor speed is adjusted in order to ensure that the heating demand of the second heat sink can be met. Next, the process is forwarded to step 19, where it is investigated whether or not a switch in operating mode from the second operating mode back to the first operating mode has been detected.

In the case that step 17 reveals that the temperature relating to the second heat sink is not out of range, the compressor speed is maintained at the current level. Since the temperature relating to the second heat sink is, in this case, within a suitable range, the current compressor speed ensures that the heating demand of the second heat sink is met, and it is therefore appropriate to maintain this compressor speed.

Thus, the process is forwarded directly to step 19 in order to investigate whether or not a switch in operating mode from the second operating mode back to the first operating mode has been detected.

In the case that step 19 reveals that a switch in operating mode has not been detected, the process is returned to step 16, and the compressor continues operating at the current compressor speed. In the case that step 19 reveals that a switch in operating mode has been detected, the process is forwarded to step 20, where the stored compressor speed is restored. Thus, in this case, following a switch in operating mode from the second operating mode to the first operating mode, the compressor is operated at the speed at which it operated when the switch from the first operating mode to the second operating mode took place.

Finally, the process is returned to step 13, and the compressor is once again operated according to the first operating mode.

## Claims

1. A method for controlling a heating capacity of a heat pump (2), the heat pump (2) being arranged for supplying heat to a first heat sink (9) and to a second heat sink (11), wherein the first heat sink is a space heating system (9) and the second heat sink is a hot tap water system (11), the method comprising the steps in the following order:
- operating (13) the heating capacity of the heat pump (2) according to a first operating mode in which heat is primarily supplied to the first heat sink (9),
- detecting (14) a switch in operating mode from the first operating mode to a second operating mode in which heat is primarily supplied to the second heat sink (11),
- storing (15) a compressor speed of the heat pump (2), at which the heat pump (2) operated prior to the switch in operating mode from the first operating mode to the second operating mode,
- maintaining (16) the compressor speed of the heat pump (2), at which the heat pump (2) operated prior to the switch in operating mode, after the switch in operating mode from the first operating mode to the second operating mode has been detected,
- monitoring (17) a temperature related to the second heat sink (11),
- adjusting (18) the compressor speed of the heat pump (2) in accordance with the monitored temperature,
- detecting (19) a switch in operating mode from the second operating mode to the first operating mode, and
- restoring (20) the stored compressor speed and operating the heat pump (2) at the stored compressor speed, after the switch in operating mode from the second operating mode to the first operating mode has been detected.

## Patentansprüche

1. Verfahren zur Steuerung der Heizleistung einer Wärmepumpe (2), wobei die Wärmepumpe (2) so angeordnet ist, dass sie eine erste Wärmesenke (9) und eine zweite Wärmesenke (11) mit Wärme versorgt, wobei es sich bei der ersten Wärmesenke um eine Raumheizungsanlage (9) und bei der zweiten Wärmesenke um eine Anlage für warmes Leitungswasser (11) handelt und das Verfahren die Schritte in der folgenden Reihenfolge umfasst:
- Steuerung (13) der Heizleistung der Wärmepumpe (2) gemäß einer ersten Betriebsart, in der die Wärme primär an die erste Wärmesenke (9) geliefert wird,
- Erkennung (14) eines Betriebsartenwechsels von der ersten Betriebsart in eine zweite Betriebsart, in der die Wärme primär an die zweite Wärmesenke (11) geliefert wird,
- Speicherung (15) einer Verdichterdrehzahl der Wärmepumpe (2), mit der die Wärmepumpe (2) vor dem Betriebsartenwechsel von der ersten Betriebsart in die zweite Betriebsart betrieben wurde,
- Aufrechterhaltung (16) der Verdichterdrehzahl der Wärmepumpe (2), mit der die Wärmepumpe (2) vor dem Betriebsartenwechsel betrieben wurde, nachdem der Betriebsartenwechsel von der ersten Betriebsart in die zweite Betriebsart erkannt wurde,
- Überwachung (17) einer Temperatur im Zusammenhang mit der zweiten Wärmesenke (11),
- Einstellung (18) der Verdichterdrehzahl der Wärmepumpe (2) entsprechend der überwachten Temperatur,
- Erkennung (19) eines Betriebsartenwechsels von der zweiten Betriebsart in die erste Betriebsart und
- Wiederherstellung (20) der gespeicherten Verdichterdrehzahl und Betrieb der Wärmepumpe (2) mit der gespeicherten Verdichterdrehzahl, nachdem der Betriebsartenwechsel von der zweiten Betriebsart in die erste Betriebsart erkannt wurde.

## Revendications

1. Procédé de commande d'une puissance de chauffage d'une pompe à chaleur (2), la pompe à chaleur (2) étant conçue pour fournir de la chaleur à un premier dissipateur de chaleur (9) et à un second dissipateur de chaleur (11), le premier dissipateur de chaleur étant un système de chauffage d'intérieur (9) et le second dissipateur de chaleur étant un système d'eau chaude du robinet (11), le procédé comprenant les étapes dans l'ordre suivant :
- exploitation (13) de la puissance de chauffage de la pompe à chaleur (2) selon un premier mode de fonctionnement dans lequel la chaleur est principalement fournie au premier dissipateur de chaleur (9),
- détection (14) d'un changement de mode de fonctionnement, du premier mode de fonctionnement à un second mode de fonctionnement, dans lequel la chaleur est principalement fournie au second dissipateur de chaleur (11),
- enregistrement (15) d'une vitesse de compresseur de la pompe à chaleur (2) à laquelle la pompe à chaleur (2) fonctionnait avant le changement du premier mode de fonctionnement au second mode de fonctionnement,
- maintien (16) de la vitesse de compresseur de la pompe à chaleur (2) à laquelle la pompe à chaleur (2) fonctionnait avant le changement de mode de fonctionnement, après détection du changement de mode de fonctionnement, du premier mode de fonctionnement au second mode de fonctionnement,
- surveillance (17) d'une température relative au second dissipateur de chaleur (11),
- réglage (18) de la vitesse du compresseur de la pompe à chaleur (2) en fonction de la température surveillée,
- détection (19) d'un changement de mode de fonctionnement, du second mode de fonctionnement au premier mode de fonctionnement, et
- rétablissement (20) de la vitesse de compresseur enregistrée et exploitation de la pompe à chaleur (2) à la vitesse de compresseur enregistrée, après détection du changement de mode de fonctionnement, du second mode de fonctionnement au premier mode de fonctionnement.
